## Europäisches Patentamt

## European Patent Office

## Office européen des brevets

(19)

(11) Numéro de publication: **0 048 515**
**B1**

(12)

# FASCICULE DE BREVET EUROPEEN

(45) Date de publication du fascicule du brevet: **28.03.84**

(51) Int. Cl.³: **H 04 B 3/23**

(21) Numéro de dépôt: **81201014.8**

(22) Date de dépôt: **11.09.81**

(54) Annuleur d'écho numérique muni d'un convertisseur analogique-numérique à dynamique réglable.

(30) Priorité: **19.09.80 FR 8020251**

(43) Date de publication de la demande:
**31.03.82 Bulletin 82/13**

(45) Mention de la délivrance du brevet:
**28.03.84 Bulletin 84/13**

(84) Etats contractants désignés:
**BE DE FR GB IT NL SE**

(56) Documents cités:
**FR - A - 2 358 790**
**FR - A - 2 377 734**
**US - A - 3 836 734**
**US - A - 4 113 997**

(73) Titulaire: **TELECOMMUNICATIONS RADIOELECTRIQUES ET TELEPHONIQUES T.R.T.**
**88, rue Brillat Savarin**
**F-75013 Paris (FR)**

(72) Inventeur: **Combier, Michel**
**SOCIETE CIVILE S.P.I.D. 209 rue de l'Université**
**F-75007 Paris (FR)**

(74) Mandataire: **Tissot, Jean et al,**
**Société Civile S.P.I.D. 209, rue de l'Université**
**F-75007 Paris (FR)**

Courier Press, Leamington Spa, England.

# Annuleur d'écho numérique muni d'un convertisseur analogique-numérique à dynamique réglable

L'invention concerne un annuleur d'echo connecté entre une première et une deuxième voie de transmission unidirectionnelle et destiné à annuler un signal d'écho se produisant dans la deuxième voie en réponse au signal dans la première voie, cet annuleur d'écho comportant:

— un dispositif de traitement numérique réglable qui est connecté à la première voie et qui est réglé au moyen d'un circuit de réglage,

— un circuit de différence fournissant un signal résiduel résultant de la différence entre le signal dans la deuxième voie et le signal fourni par le dispositif de traitement réglable,

— un covertisseur analogique-numérique qui convertit le signal résiduel échantillonné en un signal numérique de commande dudit circuit de réglage.

Un annuleur d'écho est utilisé par exemple dans un modem de transmission de données dont les voies unidirectionnelles émission et réception formant ensemble un circuit quatre fils sont souvent couplées par un circuit de couplage, appelé jonction hybride, de façon que ce modem ait avec l'extérieur un accès deux fils. On sait que lorsqu'on établit une liaison entre deux modems par leurs accès deux fils, il peut se produire intempestivement, dans la voie réception d'un modem, un signal d'écho créé par le signal de la voie émission du même modem et dû à des imperfections de sa jonction hybride et/ou des réflexions de signaux dans la liaison. Un annuleur d'écho a pour but d'annuler automatiquement ce signal d'écho intempestif qui apparaît dans la voie réception. L'avantage de cette opération d'annulation d'écho est de permettre une transmission simultanée entre deux modems reliés par leurs accès deux fils.

La structure d'annuleur d'écho décrite plus haut est bien connue et décrite par exemple dans les demandes de brevet francais publiées n° 2 358 790 et n° 2 377 734 au nom de la demanderesse et concernant respectivement la transmission de données en bande de base et en bande vocale. Le dispositif de traitement numérique réglable est généralement un filtre numérique adaptatif ou un ensemble de filtres numériques, couplé à la voie d'émission du modem et muni d'un circuit de réglage des coefficients de ce filtre ou de cet ensemble de filtres. Pour simplifier la terminologie, le dispositif de traitement numérique réglable est appelé simplement par la suite filtre numérique. Ce filtre fournit un signal numérique appelé signal de copie d'écho, qui est converti en analogique avant d'être appliqué à une entrée d'un circuit de différence dont l'autre entrée reçoit le signal qui apparaît dans la voie réception du modem et qui comprend notamment le signal d'écho parasite à annuler. Le signal fourni par le circuit de différence est appelé par la suite signal résiduel. Des échantillons de ce signal résiduel sont appliqués à un convertisseur analogique-numérique qui fournit la version numérique du signal résiduel, utilisée comme signal de commande du circuit de réglage des coefficients du filtre. Dans ce circuit de réglage sont mis en oeuvre des algorithmes décrits par exemple dans les demandes de brevet précitées, permettant le réglage des coefficients par récurrences successives de façon que ces coefficients convergent vers des valeurs minimisant la valeur quadratique moyenne du signal d'écho restant présent dans le signal résiduel et résultant de la différence entre le signal d'écho parasite et le signal de copie d'écho fourni par le filtre. Cette convergence permettant pratiquement l'annulation du signal d'écho parasite doit être réalisée en présence du signal de données utile reçu, en provenance du moden distant. Ce signal de données utile se superpose au signal d'écho restant dans le signal résiduel et son niveau relatif vis à vis du niveau du signal d'écho restant devient de plus en plus grand au cours de la convergence. Il peut en résulter dans certains cas un problème qui est lié au convertiesseur analogiquenumérique convertissant en numérique le signal résiduel et qui peut donner lieu à un arrêt de la convergence pour un signal d'écho restant relativement élevé.

Ce problème se pose notamment dans un système de transmission de données homochrone, lorsque l'on désire utiliser un convertisseur analogique-numérique à précision réduite, en vue d'en diminuer le coût. On sait que dans un système de transmission de données homochrône, les données sont émises au rythme d'une horloge locale synchrone des données reçues. Dans l'annuleur d'écho, on utilise également cette horloge locale pour former les impulsions d'échantillonnage du signal résiduel. Il en résulte que les instants d'échantillonnage du signal résiduel ont une position fixe par rapport au signal de données reçu. Si l'on veut utiliser par exemple un convertisseur analogique-numérique très simple, fournissant un signal numérique à un bit indiquant seulement la polarité du signal résiduel, la valeur de ce signal numérique n'est significative de la polarité du signal d'écho restant que si, aux instants d'échantillonnage, l'amplitude ce signal d'écho restant est plus élevée que l'amplitude du signal de données reçu. Dans un système de transmission homochrone, on peut se trouver en permanence dans la situation contraire pour laquelle il ne se produit aucune modification des coefficients du filtre, tendant à diminuer l'écho restant, cet écho restant démeurant à une valeur élevée de l'ordre de grandeur du signal de données reçu. Le même problème se pose, bien qu'à un degré un peu moindre, si l'on essaie d'utiliser un convertisseur un peu plus précis à deux ou 3 bits par exemple, ar l'écho restant demeure de l'ordre de grandeur du plus petit échelon du convertisseur. Un solution permettant d'utiliser un convertisseur fournissant un signal numérique à un bit, tout en permettant la convergence des coefficients jusqu'à une valeur faible d'écho restant, est décrite dans la demande de brevet hollandais déposée le 15 mars 1979 sous le n° 79 02 053 (demande de brevet français n° 80 05 321). Cette solution consiste à combiner le signal résiduel avec un signal auxiliaire n'ayant pas de corrélation avec ce signal résiduel et à utiliser ce signal de combinaison converti en un signal numérique à un bit pour le réglage des coefficients.

La présente invention fournit une autre solution qui évite l'emploi de ce signal auxiliaire et qui permet d'obtenir dans un système de transmission homochrone la convergence de l'annuleur d'écho jusqu'à des valeurs faibles de l'écho restant, en utilisant un convertisseur analogique-numérique à nombre de bits réduit, pouvant aller jusqu'à 2 bits.

Conformément à l'invention, dans un annuleur d'echo numérique utilisant un convertisseur analogique-numérique pour convertir en numérique le signal résiduel fourni par le circuit de différence de l'annuleur d'écho, ce convertisseur analogique-numérique ayant au moins deux bits a une dynamique qui est réglée par un signal de réglage de dynamique déduit d'un circuit détectant le niveau du signal résiduel.

Avec cet annuleur d'écho, la dynamique du convertisseur analogique-numérique diminue au fur et à mesure que durant la convergence l'amplitude de l'écho restant diminue et l'on peut utiliser alsor un convertisseur fournissant avec un faible nombre de bits un signal numérique dont la valeur reste significative de l'écho restant, jusqu'à une valeur faible de cet écho restant.

De préférence, le signal de réglage de dynamique est formé par un circuit atténuateur connecte- à la sortie d'un circuit détecteur de la valeur de crête du signal résiduel.

De préférence, le signal de sortie de l'atténuateur constitue le signal de référence utilisé dans le convertisseur pour former les signaux de seuil auxquels est comparé le signal résiduel à convertir, les deux signaux de seuil d'amplitude la plus élevée et de signes opposés ayant une amplitude égale à celle du signal de sortie de l'atténuateur.

On peut utiliser un convertisseur fournissant un signal numérique à deux bits par comparaison du signal résiduel auxdits deux signaux de seuil de signes opposés.

Comme l'écho restant est proportionnel à $V_p(1-\beta)$, $V_p$ étant la valeur de crête détectée du signal résiduel et $\beta$ le coefficient d'étténuation de l'atténuateur, il est avantageux de choisir $\beta$

assez proche de 1 (par exemple 0,9) pour réduire l'écho restant final.

La description suivante, en regard des dessins annexés, le tout donné à titre d'exemple, fera bien comprendre comment l'invention peut être réalisée.

La figure 1 représente un schéma de l'annuleur d'écho de l'invention.

La figure 2 montre un schéma du circuit de réglage d'un coefficient du filtre de l'annuleur d'écho.

Les figures 3 et 4 sont des diagrammes montrant respectivement les réponses de convertisseurs analogique-numérique à deux et trois bits, en fonction du signal résiduel appliqué à ces convertisseurs.

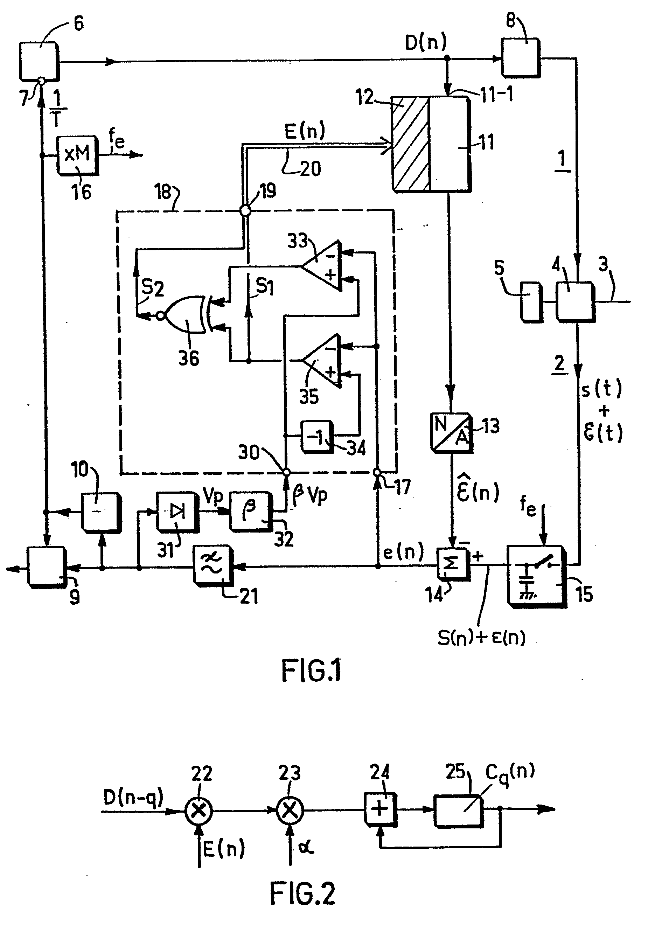

Sur la figure 1 est représenté le schéma de l'annuleur d'écho de l'invention associé à un modem. Ce modem comporte une voie unidirectionnelle d'émission *1* et une voie unidirectionnelle de réception *2* qui sont couplées à une ligne de transmission bidirectionnelle 3 par l'intermédiaire d'une jonction hybride 4 munie d'une impédance d'équilibrage 5.

La voie d'émission *1* a son entrée connectée à une source de données 6 qui fournit des données à la fréquence

$$\frac{1}{T}$$

d'un signal d'horloge appliqué à sa borne d'horloge 7. On suppose que ces données sont transmises en bande de base et elles sont appliquées à un codeur 8 dans lequel sont effectués par exemple un codage biphase et un filtrage passebas. Le signal de données ainsi codé est appliqué à l'accès émission de la jonction hybride 4 et transmis vers le modem distant non représenté, via la ligne de transmission 3.

Le signal de données émis de la même manière par le modem distant est reçu dans le modem dit local, représenté sur la figure et il est dirigé par la jonction hybride 4 à l'entrée de la voie réception *2* de ce modem. Ce signal reçu qui a le même caractère que le signal qui est appliqué à l'accès émission de la jonction hybride est fourni simultanément au récepteur 9 qui est chargé de restituer les données transmises par le modem distant et au dispositif d'extraction d'horloge 10 qui est chargé de fournir au récepteur 9 un signal d'horloge de fréquence

$$\frac{1}{T}$$

et synchrone du signal d'horloge de fréquence

$$\frac{1}{T}$$

qui est utilisé dans le modem distant pour émettre les données.

Dans le système de transmission homochrone envisagé à la figure 1, le signal d'horloge fourni par le dispositif d'extraction 10 est également appliqué à la borne d'horloge 7 de la source de données 6 pour que le modem local et le modem distant émettent les données en synchronisme. On peut noter ici que dans un système de transmission dit plésiochrone où ces données ne sont pas émises en synchronisme, le signal d'horloge appliqué à la source de données 6 proviendrait d'un générateur d'horloge indépendant du dispositif d'extraction 10.

Quand un signal de données provenant de la voie émission *1* du modem local est appliqué à l'accès émission de la jonction hybride 4, il apparaît sur sa voie réception *2* un signal d'écho $\varepsilon(t)$ dû à des imperfections inévitables de l'équilibrage de la jonction hybride et/ou à des discontinuités d'impédance dans la ligne de transmission 3, qui produisent des réflexions de signaux. Ce signal d'écho parasite $\varepsilon(t)$ se superpose dans le voie réception *2* au signal de données utile $s(t)$ provenant du modem distance et peut empêcher la restitution correcte des données par le récepteur 9.

L'annuleur d'écho chargé du supprimer ce signal d'écho comporte un dispositif de traitement numérique réglable 11 qui reçoit le signal de données binaires fourni par la source de données 6 et qui est muni d'un circuit de réglage 12 qui permet de faire varier le signal de sortie du dispositif de traitement 11. On suppose par la suite que ce dispositif 11 est un filtre numérique transversal qui effectue des opérations linéaires pour pouvoir annuler un signal d'écho linéaire; le circuit de réglage 12 est alors un circuit qui règle les coefficients du filtre transversal 11. Le signal de sortie numérique du filtre 11 est converti en un signal analogique à l'aide du convertisseur numérique-analogique 13. Ce signal appelé signal de copie d'écho est appliqué à l'entrée (−) du circuit de différence 14. L'entrée (+) de ce circuit de différence est connectée à la sortie du circuit d'échantillonnage et de maintien 15 dans lequel le signal $s(t)+\varepsilon(t)$ apparaissant à l'accès réception de la jonction hybride 4 est échantillonné. La fréquence d'échantillonnage $f_e$ est un multiple de la fréquence des données

$$\frac{1}{T}$$

et sa valeur

$$\frac{M}{T}$$

est choisie de façon que le théorème de Shannon soit respecté vis à vis du signal $s(t)+\varepsilon(t)$. La fréquence d'échantillonnage

$$f_e = \frac{M}{T}$$

est produite par le circuit multiplicateur de fréquence 16 connecté à la sortie du dispositif d'extraction d'horloge 10.

A la sortie du circuit de différence 14, on obtient un signal appelé par la suite signal résiduel, qui résulte de la somme aux instants d'échantillonnage du signal utile de données reçu et du signal de différence entre le signal d'écho et le signal de copie d'écho. Ce signal de différence est appelé par la suite écho restant. Le signal résiduel fourni par le circuit de différence 14 est appliqué à l'entrée 17 d'un convertisseur analogique-numérique 18. A la sortie 19 de ce convertisseur apparaît la version numérique du signal résiduel qui est appliquée, via un bus 20, au circuit de réglage 12 des coefficients du filtre transversal 11. Ces coefficients doivent être réglés de manière qu'aux instants d'échantillonnage l'écho restant soit pratiquement annulé de sorte qu'à ces instants le signal résiduel ne contienne plus que le signal utile de données reçu. Ce signal résiduel, alors pratiquement exempt de signal d'écho, est lissé par le filtre passe-bas 21 puis appliqué au récepteur 9.

On rappelle maintenant brièvement les calculs à mettre en oeuvre dans le filtre transversal 11 et dans le circuit de réglage 12 pour obtenir l'annulation de l'écho restant aux instants d'échantillonnage.

On appelle nT les instants à la fréquence

$$\frac{1}{T},$$

auxquels apparaît le signal binaire de données à l'entrée du filtre transversal 11 (n entier allant de $-\infty$ à $+\infty$). Pour simplifier les formules donnant les calculs à effectuer, on ne considère par la suite, parmi les instants d'échantillonnage à la fréquence

$$f_e = \frac{M}{T},$$

qu ceux se produisant à la fréquence

$$\frac{1}{T}$$

aux instants nT, étant entendu que des calculs identiques doivent être effectués aux autres instants d'échantillonnage se produisant à la fréquence

$$\frac{1}{T}$$

avec des décalages de temps

$$\frac{T}{M}.$$

Aux instants d'échantillonnage nT, on appelle:

D(n) le signal de données fourni au filtre transversal 11,
s(n) le signal utile de données reçu,
$\varepsilon$(n) le signal d'écho,
$\hat{\varepsilon}$(n) le signal de copie d'écho,
e(n) le signal résiduel analogique,
E(n) le signal résiduel numérique.

Le signal résiduel analogique peut s'écrire:

$$e(n)=s(n)+[\varepsilon(n)-\hat{\varepsilon}(n)] \qquad (1)$$

La fonction de l'annuleur d'écho est d'annuler l'écho restant

$$[\varepsilon(n)-\hat{\varepsilon}(n)].$$

Le filtre transversal 11 stocke à un instant nT, N échantillons précédentes du signal de données D(n), ces échantillons pouvant s'écrire D(n—q), avec q entier variable de 0 à N-1. Si l'on appelle $C_q$(n) les N coefficients de ce filtre à un instant nT, chaque échantillon S(n) fourni par le filtre à un instant nT résulte de l'opération:

$$S(n)= \sum_{q=0}^{N-1} D(n-q) . C_q(n) \qquad (2)$$

Il n'est pas nécessaire de décrire en détail les circuits mis en oeuvre dans le filtre transversal 11 pour réaliser les calculs indiqués par la formule (2). Ce filtre doit comporter des moyens (par exemple un registre à décalage) pour stocker N échantillons successifs du signal de données D(n) appliqué à son entrée, des moyens de calcul pour pondérer ces échantillons successifs par les coefficients $C_q$(n) fournis par le circuit de réglage 12 et pour former la somme de ces échantillons pondérés.

Dans le circuit de réglage 12, le critère généralement utilisé pour le réglage des coefficients du filtre est la minimisation de la valeur quadratique moyenne du signal d'écho restant $\varepsilon$(n)—$\hat{\varepsilon}$(n). Ce réglage est effectué à partir de la version numérique E(n) du signal résiduel e(n), en réglant chaque coefficient $C_q$(n) par récurrences successives suivant la formule ci-après, reliant la valeur $C_q^i$(n) de ce coefficient à la récurrence i à sa valeur $C_q^{i+1}$(n) à la récurrence i+1:

$$C_q^{i+1}(n)=C_q^i(n)+\alpha . E^i(n) . D(n-q) \qquad (3)$$

Dans cette formule $E^i$(n) est la valeur du signal résiduel numérique à la récurrence i; D(n—q) est la valeur d'un échantillon du signal de données entré dans le filtre à l'instant précédent (n—q)T et à multiplier dans le filtre par le coefficient $C_q$(n); $\alpha$ est un coefficient petit par rapport à 1, qui détermine la grandeur de la modification des coefficients à chaque récurrence.

La formule de récurrence (3) est mise en oeuvre pour chaque coefficient $C_q$(n) au moyen du circuit représenté à la figure 2. Il comporte un circuit multiplicateur 22 qui forme à chaque instant nT le produit D(n—q) . E(n). Ce produit est pondéré par le coefficient $\alpha$ à l'aide du circuit multiplicateur 23. Le terme de modification $\alpha . D(n—q)$ est ajouté au moyen du circuit additionneur 24 au coefficient considéré $C_q$(n) sortant du circuit 25 produisant un retard T. Si la période des récurrences est T, on obtient à la sortie du circuit 25, la valeur du coefficient à utiliser dans le filtre 11 à l'instant suivant (n+1)T. Après un certaion nombre de récurrences successives, l'ensmble des coefficients du filtre 11 doit converger vers des valeurs telles qu l'écho restant

$$[\varepsilon(n)-\hat{\varepsilon}(n)]$$

soit pratiquement annulé dans le signal résiduel e(n).

Mais, comme on l'a déjà indiqué, il peut se poser un problème concernant cette convergence lorsque la formule de récurrence (3) est mise en oeuvre avec un signal numérique E(n) à nombre de bits réduit. On est conduit à cette solution notamment dans les systèmes de transmission de données à haute vitesse qui nécessitent une fréquence d'échantillonnage $f_e$ élevée et donc une vitesse de conversion élevée pour le convertisseur analogique-numérique 18. Par exemple pour une transmission de données en bande de base à 64 K bits/S et un codage biphase dans le codeur 8, la fréquence d'échantillonnage $f_e$ requise est de 256 kHz. Pour réduire le coût du convertisseur 18 il est alors très souhaitable que sa précision soit faible. La solution la plus simple et la moins coûteuse est d'utiliser un convertisseur 18 fournissant un signal numérique E(n) à un seul bit, ce bit indiquant le signe du signal résiduel e(n). Mais, comme le montre la formule (1), aux instants d'échantillonnage le signal résiduel e(n) est la somme du signal de données reçu s(n) et de l'écho restant

$$[\varepsilon(n)-\hat{\varepsilon}(n)].$$

Or le signe du signal résiduel e(n), c'est-à-dire la valeur du bit du signal E(n), est déterminé par le signe du plus grand des deux signaux s(n) et

$$[\varepsilon(n)-\hat{\varepsilon}(n)].$$

Lorsqu'aux instants d'échantillonnage on a:

$$|\varepsilon(n)-\hat{\varepsilon}(n)|>|s(n)| \qquad (4)$$

le bit du signal E(n) est déterminé par le signe de l'écho restant et la modification des coefficients peut s'effectuer correctement pour diminuer l'écho restant.

Lorsqu'aux instants d'échantillonnage on a:

$$|\varepsilon(n)-\hat{\varepsilon}(n)|<|s(n)| \qquad (5)$$

le bit du signal E(n) est déterminé par le signe du signal de données reçu, la modification des coefficients ne dépend pas de l'écho restant et cet écho restant n'est pas forcément diminué.

Dans un système de transmission homochrone, la fréquence d'échantillonnage $f_e$ est, comme c'est le cas pour la figure 1, déduite d'une horloge fournie par le dispositif d'extraction 10 et synchrone des données reçues. Les instants d'échantillonnage ont donc une position fixe par rapport au signal de données reçu s(t). Ces instants d'échantillonnage peuvent se produire en permanence à des instants où l'amplitude |s(n)| des échantillons du signal de données reçu est grande et l'on peut se trouver très rapidement au ·cours de la convergence dans la condition (5). La convergence de l'annuleur d'écho cesse alors, avec un écho restant ayant u ne amplitude |ε(n)—ê(n)| de l'ordre de grandeur de l'amplitude |s(n)| qui est grande.

One peut remarquer que dans un système de transmission plésiochrone, la fréquence d'échantillonnage $f_e$ serait déduite d'une horloge locale indépendante de l'horloge fournie par le dispositif d'extraction 10. Dans ce cas, aux instants d'échantillonnage, l'amplitude |s(n)| des échantillons du signal de données reçu s(t) peut prendre toutes les valeurs allant d'un maximum à zéro de sorte que l'on se trouve forcément pour certains instants d'échantillonnage dans la condition (4) pour laquelle les coefficients sont correctement modifiés. La convergence des coefficients peut donc se poursuivre jusqu'à des valeurs quasiment nulles de l'écho restant, avec toutefois un temps de convergence augmenté.

La présente invention vise donc principalement à éviter le grave inconvénient que présente l'emploi d'un convertisseur analogique-numérique à un bit dans un annuler d'écho utilisé dans un système de transmission homochrone.

Dans le mode de réalisation représenté sur la figure 1, l'annuleur d'écho de l'invention comporte un convertisseur analogique-numérique 18 qui convertit le signal résiduel e(n) appliqué à son entrée 17 en un signal numérique E(n) à 2 bits, apparaissant à sa sortie 19 et qui a une dynamique qui est réglée par le signal de réglage de dynamique appparaissant sur sa borne 30. Ce signal de réglage de dynamique est obtenu à la sortie de l'atténuateur 32 qui reçoit le signal de sortie du circuit détecteur de crête 31, connecté à la sortie du filtre 21. Le circuit 31 fournit une tension $V_p$ indiquant la valeur de crête ou le niveau du signal résiduel avec une constante de temps telle que cette tension $V_p$ puisse suivre correctement la décroissance de l'écho restant pendant la convergence. L'atténuateur 32 fournit la tension $\beta . V_p$, $\beta$ étant un coefficient positif inférieur à 1.

La tension $\beta V_p$ est utilisée comme signal de référence dans le convertisseur analogique-numérique 18. Elle est appliquée à l'entrée non inverseuse du circuit comparateur 33 et, après changement de sa polarité dans le circuit 34, à l'entrée non inverseuse du circuit comparateur 35. Le signal résiduel à convertir e(n) est appliqué aux entrées inverseuses des circuits comparateurs 33 et 35. Les sorties de ces deux comparateurs sont connectées aux entrées du circuit "NON-OU exclusif" 36. Comme on le montrera par la suite, les deux bits du signal E(n) fourni par le convertisseur sont formés respectivement à la sortie du circuit comparateur 35 et du circuit "NON-OU exclusif" 36.

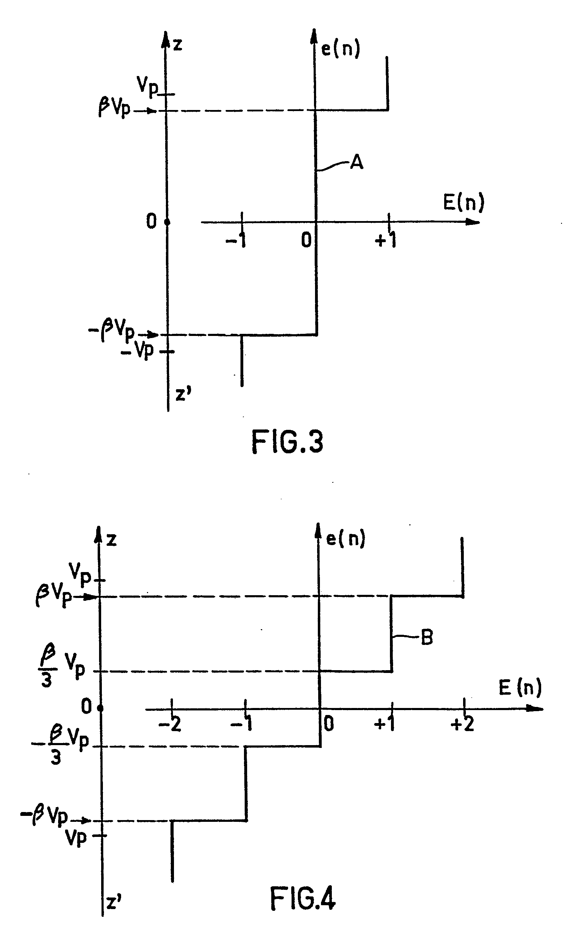

Le diagramme de la figure 3 illustre le principe de fonctionnement du convertisseur à dynamique réglable que l'on vient de décrire. Dans le système d'axes rectangulaires représenté, on porte sur l'axe des ordonnées les valeurs du signal analogique résiduel e(n) et sur l'axe des abscisses on porte les 3 valeurs discrètes +1, —1 et 0 que peut prendre le signal numérique E(n) en réponse au signal e(n). Sur l'axe zoz' en regard de l'axe des ordonnées, on a reporté les tension $+V_p$ et $-V_p$ correspondant à la valeur de crête $V_p$ détectée par le détecteur de crête 31 et les tensions $+\beta V_p$ et $-\beta V_p$ qui sont utilisées comme tensions de seuil dans les comparateurs 33 et 35. La courbe en trait gras indique la réponse E(n) que fournit le convertisseur en fonction du signal analogique résiduel e(n).

Pour $-\beta . V_p < e(n) < +\beta . V_p$ on a E(n)=0.
Pour $e(n) > \beta . V_p$ on a E(n)=+1.
Pour $e(n) < -\beta . V_p$ on a E(n)=—1.

Le tableau I ci-dessous indique comment sont codées les valeurs discrètes +1, —1 et 0 du signal numérique E(n).

TABLEAU I

| e(n) | Sortie 35 | Sortie 33 | Sortie 36 | E(n) $S_1$ $S_2$ | |
|------|-----------|-----------|-----------|------|------|
| $+\beta . V_p$ | 0 | 0 | 1 | 0 | 1 |
| $-\beta . V_p$ | 0 | 1 | 0 | 0 | 0 |
| | 1 | 1 | 1 | 1 | 1 |

La première colonne indique les deux tensions de seuil $+\beta V_p$ et $-\beta V_p$ auxquelles est comparé le signal analogique résiduel e(n) variable d'une valeur supérieure à $+\beta V_p$ à une valeur inférieure à $-\beta V_p$. Les trois colonnes suivantes indiquent les signaux logiques qui en résultent à la sortie des comparateurs 35 et 33 et du circuit "NON-OU exclusif" 36. Enfin la dernière colonne indique les valeurs des deux bits $S_1$ et $S_2$ du signal numérique E(n), le bit $S_1$ de plus fort poids étant fourni par la sortie du comparateur 35 et le bit de plus faible poids étant fourni par la sortie du circuit 36. Il est clair que le signal numérique $S_1S_2$ obtenu de cette manière représente dans le code des compléments à deux, le signal E(n) à valeurs $+1$, $-1$ et 0 conformément au diagramme de la figure 3. Ce signal ainsi codé conveient parfaitement pour les calculs à effectuer dans le circuit de réglage 12.

Avec l'utilisation de ce convertisseur à deux bits et à dynamique réglable, commandée à partir du niveau du signal résiduel, on ne court plus le risque, comme avec un convertisseur à un bit, de l'arrêt de la convergence de l'annuleur d'écho, pour une amplitude relativement grande de l'écho restant, ayant l'ordre de grandeur de l'amplitude du signal de données reçu aux instants d'échantillonnage.

On suppose d'abord que le signal d'écho $\varepsilon(t)$ est plus petit que le signal de données reçu s(t) de sorte que l'écho restant contribue toujours pour une plus faible par que le signal de données reçu, à la valeur de crête détectée $V_p$ du signal résiduel. Le signal numérique E(n) a alors, au moins à certains instants d'échantillonnage, une valeur significative de l'écho restant, tant que cet écho restant est supérieur à

$$V_p - \beta V_p = V_p(1-\beta).$$

Tant que cette condition est réalisée, les coefficients de filtre de l'annuleur d'écho convergent de façon à diminuer l'écho restant et en même temps la valeur de crête détectée $V_p$ diminue jusqu'à atteindre un valeur $V_{po}$ correspondant à l'ordre de grandeur de la valeur de crête du signal de données reçu. La valeur finale de l'écho restant est alors environ égale à $V_{po}(1-\beta)$.

On suppose maintenant que le signal d'écho $\varepsilon(t)$ est plus grande que le signal de données reçu, de sortie qu'à la mise en route de l'annuleur d'écho, l'écho restant contribue pour une plus grande part que le signal de données reçu à la valeur de crête détectée $V_p$. Le signal numérique E(n) a alors, au moins à certains instants d'échantillonnage, une valeur différente de zéro et indiquant une amplitude élevée de l'écho restant. Pour ces instants d'échantillonnage, une correction des coefficients de filtre de l'annuleur d'écho est effectuée de façon à diminuer l'écho restant et l'on se retrouve ensuite dans la condition précitée où l'écho restant contribue pour une plus faible part que le signal de données reçu à la valeur de crête détectée $V_p$. L'écho restant peut alors atteindre sa valeur finale $V_{po}(1-\beta)$.

Il est clair que pour diminuer la valeur finale de l'écho restant on a intérêt à donner au coefficient $\beta$ fixant les seuils du convertisseur, une valeur proche de 1. Toutefois, pour des valeurs trop proches de 1, le signal de sortie E(n) de ce convertisseur risque pour la majeure partie des instants d'échantillonnage d'avoir une valeur nulle, ce qui augmente le temps de convergence. One peut choisir par exemple pour le coefficient $\beta$ une valeur de 0,9 qui permet à la fois une valeur réduite de l'écho restant et un temps de convergence raisonnable.

Comme cela résulte des explications données plus haut, il arrive que, pour certains instants d'échantillonnage à la mise en route de l'annuleur d'écho, notamment lorsque le signal d'écho est plus grand que le signal de données reçu, le signal numerique E(n) à deux bits indique une valeur nulle de l'écho restant, alors que cet écho restant a une valeur relativement élevée; il en résulte pratiquement qu'aucune modification des coefficients de filtre de l'annuleur d'écho n'est effectuée pour ces instants d'échantillonnage, ce qui augmente le temps de convergence de l'annuleur d'écho.

Dans le cas où l'on désire diminuer ce temps de convergence, on peut utiliser un convertisseur numérique-analogique fournissant un signal numérique E(n) à plus de deux bits et ayant une dynamique réglable, commandé par la valeur de crête détectée $V_p$ du signal résiduel. Il n'est pas nécessaire de donner un schéma d'un tel convertisseur qui peut être de n'importe quel type connu, fournissant un signal numérique par comparaison d'un signal analogique à convertir, à différents signaux de seuils formés à partir d'un signal de référence. Le branchement externe d'un tel convertisseur est exactement semblable au convertisseur 18 représenté sur la figure 1. Son entrée 17 pour signal analogique est à connecter pour recevoir le signal résiduel e(n); son entrée 30 pour signal de référence est à connecter pour recevoir le signal de réglage de dynamique $\beta V_p$; enfin sa sortie 19 fournissant le signal numérique E(n) est à connecter via le bus 20, au circuit de réglage 12.

A titre d'exemple, le diagramme de la figure 4, construit de façon analogue à celui de la figure 3, montre la réponse E(n) d'un convertisseur analogique-numérique à 3 bits, en fonction du signal résiduel analogique e(n). Le signal numérique E(n) peut prendre cinq valeurs $\pm 1$ $\pm 2$ et 0 qui peuvent être codées avec 3 bits. Sur l'axe zoz', on a indiqué les deux tensions $\pm V_p$ correspondant à la valeur de crête détecté $V_p$ et les quatre tensions de seuil utilisées dans le convertisséur,

$$\pm \beta V_p \text{ et } \pm \frac{\beta}{3} V_p.$$

La courbe en marches d'escalier en trait gras indique la réponse du convertisseur. On voit notamment que la gamme du signal résiduel d'entrée e(n) pour laquelle le signal numérique de sortie E(n) a une valeur nulle, est réduite à

$$\left[-\frac{\beta}{3}V_{p'} + \frac{\beta}{3}V_p\right]$$

au lieu de

$$[-\beta V_{p'} + \beta V_p]$$

dans le cas du convertisseur à deux bits. Il en résulte que pour un plus grand nombre d'instants d'échantillonnage, on a une modification des coefficients tendant à diminuer l'écho restant, ce qui procure une diminution du temps de convergence. La valeur finale de l'écho restant est toujours $V_{po}(1-\beta)$ et est indépendante de l'échelon du convertisseur, c'est-à-dire de l'écart

$$\frac{2\beta}{3}V_p$$

entre deux seuils successifs.

Sur le diagramme de la figure 4, les quatre seuils de tension utilisés dans le convertisseur ont été également répartis entre eux, de façon que la loi de conversion soit linéaire. Mais on pourrait aussi répartir de façon différente ces seuils entre eux, pour obtenir une loi de conversion plus adaptée dans certains cas à une convergence rapide de l'annuleur d'écho.

Enfin, on peut très bien utiliser un convertisseur à plus grand nombre de bits et à dynamique réglable, commandée par le niveau du signal résiduel. Mais la diminution du temps de convergence est de plus en plus faible et ne justifie pas, au-delà d'un certain nombre de bits, un coût plus élevé du convertisseur.

Finalement, par rapport à un annuleur d'écho connu utilisant un convertisseur à dynamique fixe et procurant un écho restant final dépendant de l'échelon de ce convertisseur, l'annuleur d'écho de l'invention utilisant un convertisseur à dynamique réglable par le niveau du signal résiduel a l'avantage de procurer un écho restant final $V_{po}(1-\beta)$ indépendant de l'échelon du convertisseur; on peut alors utiliser un convertisseur à nombre de bits réduit, en fonction du temps de convergence admissible.

L'utilisation de l'annuleur d'écho de l'invention n'est pas limitée à l'exemple choisi concernant la transmission de données en bande de base. Il peut être utilisé également pour la transmission de données en bande vocale ou l'on utilise aussi la version numérique d'un signal résiduel pour régler les coefficients d'un ensemble des filtres numériques. L'annuleur d'écho de l'invention peut être utilisé aussi dans un système de transmission de données plesiochrone où il peut permettre de réduire le temps de convergence par rapport à un annuleur d'écho utilisant un convertisseur à un seul bit. Einfin on peut également utiliser cet annuleur d'écho dans un système de transmission de signaux téléphoniques.

**Revendications**

1. Annuleur d'écho connecté entre une première (1) et une deuxième (2) voie de transmission unidirectionnelle et destiné à annuler un signal d'écho $(\varepsilon(t))$ se produisant dans la deuxième voie en réponse au signal dans la première voie, cet annuleur d'écho comportant:

— un dispositif (11) de traitement numérique réglable qui est connecté à la première voie (1) et qui est réglé au moyen d'un circuit de réglage, (12),
— un circuit de différence (14) fournissant un signal résiduel (e(n)) résultant de la différence entre le signal $(s(t)+\varepsilon(t))$ dans la deuxième voie et le signal $(\hat{\varepsilon}(n))$ fourni par le dispositif de traitement réglable,
— convertisseur analogique-numérique (18) qui convertit le signal résiduel échantillonné (e(n)) en un signal numérique (E(n)) de commande dudit circuit de réglage, (12),

caractérisé en ce que ledit convertisseur analogique-numérique (18) ayant au moins deux bits a une dynamique qui est réglée par un signal $(\beta V_p)$ de réglage de dynamique déduit d'un circuit (31) détectant le niveau du signal résiduel (e(n)).

2. Annuleur d'écho selon la revendication 1, caractérisé en ce que le signal de réglage de dynamique est formé par un circuit atténuateur (32) connecté à la sortie d'un circuit (31) détecteur de la valeur de crête du signal résiduel.

3. Annuleur d'écho selon la revendication 2, caractérisé en ce que le signal $(\beta V_p)$ de sortie de l'atténuateur (32) constitue le signal de référence qui sert à former les signaux de seuils auxquels est comparé le signal (e(n)) à convertir dans le convertisseur analogique-numérique, les deux signaux de seuil d'amplitude la plus élevée et de signes opposés ayant une amplitude égale à celle du signal de sortie de l'atténuateur.

4. Annuleur d'écho selon la revendication 2 ou 3, caractérisé en ce que le convertisseur analogique-numérique forme un signal numérique à deux bits (E(n)) par comparaison du signal résiduel (e(n)) à convertir à deux signaux de seuils de signes opposés, ayant une amplitude égale à celle du signal $(\beta V_p)$ de sortie de l'atténuateur, ce signal numérique à deux bits indiquant une valeur +1 ou −1 suivant que le signal résiduel est supérieur au signal de seuil positif ou inférieur au signal de seuil négatif et une valeur 0 quand le signal résiduel est compris entre ces deux seuils.

5. Annuleur d'écho suivant l'une des revendications 2 à 4, caractérisé en ce que le coefficient ($\beta$) d'atténuation de l'atténuateur (32) est réglé à une valeur assez proche de 1.

6. Annuleur d'écho selon l'une des revendications 2 à 5, muni d'un filtre (21) dans la deuxième voie unidirectionnelle (2) pour filtrer le signal résiduel échantillonné (e(n)), caractérisé en ce que le circuit détecteur de valeur crête (31) est connecté à la sortie de ce filtre (21).

7. Annuleur d'écho selon l'une des revendications 2 à 6, caractérisé en ce que le circuit détecteur de valeur crête (31) a une constante de temps telle que ce circuit soit à même de suivre la décroissance de l'écho restant présent dans le signal résiduel (e(n)) pendant la convergence de l'annuleur d'écho.

**Patentansprüche**

1. Echokompensator angeschlossen zwischen einer ersten (1) und einer zweiten (2) Einrichtungsübertragungsstrecke zum Ausgleichen eines Echosignals ($\varepsilon$(t)), das in der zweiten Strecke in Antwort auf das Signal in der ersten Strecke auftritt, wobei dieser Echokompensator folgende Elemente enthält:

— eine einstellbare digitale Verarbeitungsanordnung (11), die an die erste Strecke (1) angeschlossen ist und mit Hilfe einer Einstellschaltung (12) eingestellt wird,
— eine Differenzschaltung (14) die ein Restsignal (e(n)) liefert, das aus der Differenz zwischen dem Signal (s(t)+$\varepsilon$(t)) in der zweiten Strecke und dem von der einstellbaren Verarbeitungsanordnung gelifterten Signal ($\hat{\varepsilon}$(n)) resultiert,
— einen Analog-Digital-Wandler (18), der das abgetastete Restsignal (e(n)) in ein digitales Steuersignal (E(n)) für die Einstellschaltung (12) umwandelt,

dadurch gekennzeichnet, dass der genannte Analog-Digital-Wandler (18) mit mindestens zwei Bits eine Dynamik hat, die von einem Dynamikregelsignal ($\beta V_p$) geregelt wird, das von einer Schaltung (31) abgeleitet wird, die den Pegel des Restsignals (e(n)) detektiert.

2. Echokompensator nach Anspruch 1, dadurch gekennzeichnet, dass das Dynamikregelsignal mit Hilfe eines Dämpfers (32) gebildet wird, der an den Ausgang einer Schaltung (31) zum Detektieren des Spitzenwertes des Restsignals angeschlossen ist.

3. Echokompensator nach Anspruch 2, dadurch gekennzeichnet, dass das Ausgangssignal ($\beta V_p$) des Dämpfers (2) das Bezugssignal bildet, das zum Bilden der Schwellensignale dient, mit denen das in dem Analog-Digital-Wandler umzuwandelnde Signal (e(n)) verglichen wird, wobei die beiden Schwellensignale mit der höchsten Amplitude und mit entgegengesetztem Vorzeichen eine Amplitude haben, die der Amplitude des Ausgangssignals des Dämpfers gleich ist.

4. Echokompensator nach Anspruch 2 oder 3, dadurch gekennzeichnet, dass der Analog-Digital-Wandler ein digitales Signal mit zwei Bits (E(n)) bildet, und zwar durch einen Vergleich des umzuwandelnden Restsignals (e(n)) mit zwei Schwellensignalen mit entgegengesetztem Vorzeichen und mit einer der Amplitude des Ausgangssignals ($\beta V_p$) des Dämpfers, gleichen Amplitude wobei dieses Zweibit-Digitalsignal einen Wert +1 oder −1 anzeigt, je nachdem, ob das Restsignal grösser ist als das positive Schwellensignal oder kleiner ist als das negative Schwellensignal, und einen Wert 0, wenn das Restsignal zwischen diesen beiden Schwellen liegt.

5. Echokompensator nach einem der Ansprüche 2 bis 4, dadurch gekennzeichnet, dass der Dämpfungskoeffizient ($\beta$) des Dämpfers (32) auf einen Wert in der Nähe vo 1 eingestellt wird.

6. Echokompensator nach einem der Ansprüche 2 bis 5 mit einem Filter (21) in der zweiten Einrichtungsstrecke (2) zum Filtern des abgetasteten Restsignals (e(n)), dadurch gekennzeichnet, dass die Spitzenwertdetektionsschaltung (31) an den Ausgang dieses Filters (21) angeschlossen ist.

7. Echokompensator nach einem der Ansprüche 2 bis 6, dadurch gekennzeichnet, dass die Spitzenwertdetektionsschaltung (31) eine derartige Zeitkonstante hat, dass diese Schaltung im Stande ist, der Verringerung des in dem Restsignal (e(n)) vorhandenen Restechos während der Konvergenz des Echokompensators zu folgen.

**Claims**

1. An echo canceller connected between a first (1) and a second (2) one-way transmission path and having for its purpose to cancel an echo signal ($\varepsilon$(t)) occurring in the second path in response to the signal in the first path, said echo canceller comprising:

— a controllable digital signal processing arrangement (11) connected to the first path (1) and controlled by means of a control circuit (12),
— a difference circuit (14) for producing a residual signal (e(n)) resulting from the difference between the signal (s(t)+$\varepsilon$(t)) in the second path and the signal ($\hat{\varepsilon}$(n)) produced by the controllable signal processing arrangement, and
— an analog-to-digital converter (18) which converts the sample residual signal (e(n)) into a digital control signal (E(n)) for the said control circuit (12),

characterized in that said analog-to-digital converter (18) forming a signal of at least two bits has a dynamic range which is controlled by a dynamic control signal ($\beta V_p$) derived from a circuit (31) for the detection of the level of the residual signal (e(n)).

2. An echo canceller as claimed in Claim 1, characterized in that the dynamic control signal is derived by means of an attenuation circuit (32) connected to the output of a circuit (31) for detecting the peak value of the residual signal.

3. An echo canceller as claimed in Claim 2, characterized in that the output signal ($\beta V_p$) of the attenuation circuit (32) forms a reference signal which is employed for forming the threshold signals with which the signal (e(n)) to be converted in the analog-to-digital converter is compared, the two threshold signals with the greatest amplitude and opposite signs having an amplitude equal to the amplitude of the output signal of the attenuation circuit.

4. An echo canceller as claimed in Claim 2 or 3, characterized in that the analog-to-digital converter forms a two-bit digital signal (E(n)) by comparing the residual signal (e(n)) to be converted with two threshold signals of opposite signs having an amplitude equal to the amplitude of the output signal ($\beta V_p$) of the attenuation circuit, said two-bit digital signal having a value +1 or −1 according as the residual signal is larger than the positive threshold signal or smaller than the negative threshold signal, and a value 0 when the residual signal is located between these two thresholds.

5. An echo canceller as claimed in any one of the Claims 2 to 4, characterized in that the attenuation coefficient ($\beta$) of the attenuation circuit (32) is adjusted to a value rather near unity.

6. An echo canceller as claimed in any one of the Claims 2 to 5, having a filter (21) in the second one-way path (2) for filtering the sampled residual signal (e(n)), characterized in that the peak value detection circuit (31) is connected to the output of this filter (21).

7. An echo canceller as claimed in any one of the Claims 2 to 6, characterized in that the peak value detection circuit (31) has a time constant such that this circuit is capable of following the decrease of the echo which remains present in the residual signal (e(n)) during the convergence of the echo canceller.

FIG.1

FIG.2

FIG.3

FIG.4